# EUROPEAN PATENT APPLICATION

(11) **EP 3 805 991 A1**
(43) Date of publication of application: **14.04.2021**
(21) Application number: 19814260.6
(22) Date of filing: 06.06.2019
(51) Int. Cl.: G06K 19/077

(54) **CONTACTLESS SMART CARD**

(30) Priority: 06.06.2018 RU 2018120924
(71) Applicant: Joint-Stock Company "Pay-Ring", Moscow 109147 (RU)
(72) Inventor: LAZAREV, Sergey Mikhailovich, Tomsk 634028 (RU)
(74) Representative: CSY London
(86) International application number: PCT/RU2019/000397
(87) International publication number: WO 2019/235968

(57) **Abstract**

The invention relates to constructional details of the mounting of circuits on digital data carriers for the transfer of data, and more particularly relates to the structure of contactless smart cards. The desired technical effect of broadening the range of technical means that can be used as contactless smart cards configured in the form of a ring, and also of simplifying the device, is achieved in a device containing the following disposed in a protective housing configured in the form of a ring: a microchip on a dielectric substrate; a frame antenna, the outputs of which are connected to the outputs of the microchip; and a capacitor arranged on the dielectric substrate and connected in parallel to the frame antenna to form therewith a contactless smart card antenna in the form of a resonant circuit, wherein the dielectric substrate is configured in the form of a ring having windings of a conductive material which form the fame antenna, and the protective housing, which is configured in the form of a ring, is made of a conductive material and has a transverse technical slot filled with a dielectric material, and also an inner annular groove in which the dielectric substrate with the microchip, the frame antenna, the capacitor and the conductive material windings are fastened.

## Description

The invention concerns structural elements used for circuit assembly on digital storage media for the purpose of transferring it, and in particular to the design of contactless smartcards.

Contactless smartcards are provided with an antenna built into the card, and an electronic module (chip) connected to the antenna. These cards allow for the exchange of data using a contactless electromagnetic connection between the card and the reading device by means of transmitting digital signals between the antenna and the card and an antenna arranged on the reading device. Contactless smart cards are frequently used as a method of payment for accessing public transport and as a means of identifying members of staff.

A contactless, or combined contact/contactless, chip card [RU 2251742, C2, G06K 19/077, 10.05.2005] is known from the prior art, comprising an antenna on a substrate, wherein the antenna comprises at least one coil screen-printed with conductive ink on the substrate, two card shells, arranged on either side of the substrate, each of which consists of at least one layer of plastic, and one microchip or module connected with the antenna, wherein the substrate is made of paper and includes cut-outs on each corner, where the two card shells are connected, wherein the card, when folded, can be laminated at the folding site, thus rendering intentional damage evident, as traces of the folding will be left on the card.

One shortcoming of this device is its relatively low resistance to environmental effects.

Additionally, a contactless smartcard [RU 92558 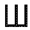 , G06K 19/077, 10.03.2010] is known that is formed as a substrate with an antenna arranged on it, comprising several coils and two card layers on either side of the substrate, and one microchip or module connected to the antenna, wherein the antenna additionally includes an electrical connection locking some of the coils of the antenna, wherein the electrical connection is arranged on a detachable part of the smartcard.

One disadvantage of this technical solution is its relatively low resistance to environmental effects due to the relatively low degree of protection of the device from harmful factors, resulting in relatively low operational reliability.

Also known from the prior art is a contactless smartcard [RU 2639577, C1, G06K19/077, 21.12.2017], comprising a microchip arranged on a substrate, a frame antenna, the outputs of which are connected to the outputs of the microchip, a capacitor connected in parallel to the frame antenna and forming with it an antenna of the device in the form of a resonance contour, wherein the substrate is made in the form of a tape of flexible dielectric material rolled into a ring, on the outer surface of which a strip of conductive material is arranged, forming the frame antenna, which, together with the microchip, is enclosed within a protective enclosure that forms a hermetic shell, wherein the end of the inner coil of the substrate is provided with a protrusion that is placed beside the outer coil of the substrate, and the strip of conductive material arranged thereon is electrically connected to a strip of conductive material arranged on the end of the outer coil of the substrate, wherein expanded pieces of conductive material arranged on both sides of the strip of conductive material under the protrusion on the end of the inner coil of the substrate serve as the plates of the capacitor.

One disadvantage of this technical solution, too, is its relatively low resistance to environmental effects due to the relatively low degree of protection of the device from harmful factors, resulting in relatively low operational reliability.

The closest prior art to the invention based on its technical nature is the contactless smart card [RU 167898, U1, G06K19/077, 11.01.2017] comprising a microchip arranged on a substrate, a frame antenna, the outputs of which are connected to the outputs of the microchip, a capacitor connected in parallel to the frame antenna and forming with it an antenna of the contactless smartcard in the form of a resonance contour, wherein the substrate is in the shape of a ring, on the outer surface of which coils of conductive material are arranged that form a frame antenna and are enclosed by an open protective foil, on which a protective enclosure forming a hermetic shell is arranged.

The disadvantage of the closest prior art is its relatively high degree of complexity due to the need for open protective foil. Moreover, the use of a shell of nonconductive material as a protective enclosure narrows the range of technical means that can be used as annular contactless smartcards because it narrows the range of applications for smartcards, the conditions of use of which require additional properties related to the need to use metal shells and the application of various design solutions for such smartcards.

The objective of the invention is to provide a device allowing for an expanded range of technical means that can be used as contactless smart cards in annular form whilst simultaneously simplifying the device.

The technical result of the invention is the expansion of the range of technical means that can be used as contactless smart cards in annular form whilst simultaneously simplifying the device.

The objective and technical result are attained by a contactless smart card comprising, within an annular protective shell, a microchip on a dielectric substrate, a frame antenna, the outputs of which are connected to the outputs of the microchip, a capacitor, arranged on the dielectric substrate and connected in parallel to the frame antenna, forming with it an antenna of the contactless smartcard in the form of a resonance contour, wherein the dielectric substrate is in the form of a ring with coils of the conductive material forming the frame antenna; according to the invention, the annular protective shell is made of conductive material and has a cross section made of dielectric material, as well as an annular internal groove in which the dielectric substrate, the microchip, the frame antenna, the capacitor, and the coils of conductive material are fastened.

Moreover, the technical result is attained by arranging coils of conductive material on a dielectric substrate.

Furthermore, the technical result is attained by the fact that the coils of conductive material, microchip, frame antenna, and capacitor arranged within the annular groove are hermetically sealed by a layer of protective material.

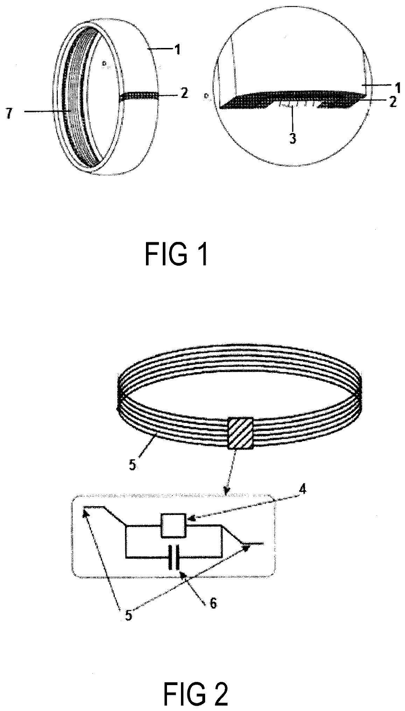

The design of the contactless smart card is shown in the drawings: Fig. 1 shows a contactless smart card, highlighting a portion in the area of the technological section;

Fig. 2 shows elements arranged in the inner annular groove of the protective shell.

The contactless smartcard comprises a protective shell 1 made of conductive material in the form of a ring, in particular made of metal, and having a technological cross-section 2 of dielectric material, as well as an inner annular groove 3 containing an annular dielectric substrate, on which a microchip 4, a frame antenna 5 made of coils of conductive material, and a capacitor 6 connected in parallel to the frame antenna 5 and forming an antenna of the contactless smart card in the form of a resonance contour, are arranged.

The coils of conductive material may be arranged on or within the dielectric substrate.

The dielectric substrate arranged within the annular groove 3, on which substrate are arranged the microchip 4, the frame antenna 5 of coils of conductive material, and the capacitor 6 connected in parallel to the frame antenna 5, may be hermetically sealed by a layer of protective material. Steel, titanium, special alloys such as tungsten carbide, noble metal alloys, etc. may be used as conductive materials for the annular protective shell 1. Ceramics, polymers, precious and semi-precious stones, etc. may be used as dielectric materials for the technological section 2 in the protective shell, and the technological section 2 in the protective shell 1 itself advantageously has a width of a few microns or more, depending primarily on the required design.

The proposed design of the contactless smartcard shifts the frequency of the resonance contour relative to a design without a conductive shell, which is taken into account when selecting the capacity and inductance depending on the geometry and material of the conductive shell.

The contactless smartcard is structured as follows:
Advantageously, the contactless smartcard, comprising a microchip 4 with near-field communication (NFC) technology, is annular in shape. The diameter of the protective shell 1 may correspond to the diameter of jewellery warn on the finger or the diameter of a bracelet worn on the wrist. The protective shell 1 may be worn as a ring, allowing for safe storage of the electronic components of the device.

The microchip 4 allows for interaction with a reading device, sending it encrypted information by means of an RF signal. The frame antenna 5, together with the capacitor 6, forms a resonance contour that acts as the antenna of the contactless smartcard. The protective shell 1 has a technological cross-section 2, and does not interfere with the operation of the smartcard, but does protect it from external electrical and magnetic fields. The coils of conductive material of the frame antenna 5 may be arranged within the dielectric substrate 7 or on ist outer surface with the protective enclosure of the coils.

The coils of conductive material of the frame antenna 5, the microchip 4, and the capacitor 6, which are arranged within the annular groove 3 on the dielectric substrate 7, may be hermetically sealed by a layer of protective material, thus improving the operational reliability of the device.

By this means, the proposed invention achieves the required technical result, i.e. expanding of the range of technical means that can be used as contactless smart cards in annular form whilst simultaneously simplifying the device. The device is simplified by omitting the protective foil and related technological components from the design.

Noble metals or alloys thereof may be used as conductive materials for the annular protective shell, thus expanding the design options for manufacture from industrial designs.

## Claims

1. A contactless smartcard, comprising, within an annular protective shell, a microchip on a dielectric substrate, a frame antenna, the outputs of which are connected to the outputs of the microchip, a capacitor, arranged on the dielectric substrate and connected in parallel to the frame antenna, forming with it an antenna of the contactless smartcard in the form of a resonance contour, wherein the dielectric substrate is in the form of a ring with coils of the conductive material forming the frame antenna, **characterised in that** the annular protective shell is made of conductive material and has a cross section made of dielectric material, as well as an annular internal groove in which the dielectric substrate, the microchip, the frame antenna, the capacitor, and the coils of conductive material are fastened.

2. Contactless smart card according to claim 1, **characterised in that** the coils of conductive material forming the frame antenna are arranged on the dielectric substrate.

3. Contactless smart card according to claim 1, **characterised in that** the coils of conductive material, microchip, frame antenna, and capacitor arranged within the annular groove are hermetically sealed by a layer of protective material.
